# FASCICULE DE BREVET EUROPEEN

(11) **EP 1 746 380 B1**
(45) Date de publication et mention de la délivrance du brevet: **03.09.2014**
(21) Numéro de dépôt: 06291140.9
(22) Date de dépôt: 12.07.2006
(51) Int. Cl.: B60K 15/073, F16K 17/16, F41H 7/02

(54) **Réservoir de carburant avec un dispositif de vidange d'urgence**
Kraftstoffbehälter mit einer Vorrichtung zum Entleeren im Notfall
Fuel tank with a device for emergency draining thereof

(30) Priorité: 20.07.2005 FR 0507695
(43) Date de publication de la demande: 24.01.2007
(73) Titulaire: NEXTER Systems, 42328 Roanne (FR)
(72) Inventeur: Bettencourt, Benoît, 92370 Chaville (FR); Carlier, Sylvain, 78280 Guyancourt (FR); Germenot, Olivier, 78000 Versailles (FR); Pizon, Benoît, 91190 Villiers le Bâcle (FR)
(74) Mandataire: Célanie, Christian

(56) Documents cités:
- WO-A-00/65266
- DE-A1- 10 045 637
- FR-A- 1 114 073
- PATENT ABSTRACTS OF JAPAN vol. 006, no. 236 (M-173), 25 novembre 1982 (1982-11-25) & JP 57 134326 A (HIROKATSU ASANO), 19 août 1982 (1982-08-19)

## Description

Le secteur technique de la présente invention est celui des réservoirs de carburant pour véhicules, et plus précisément des soupapes et dispositifs de sécurité équipant les réservoirs de véhicules et visant à minimiser les risques d'incendie en cas d'endommagement du réservoir.

DE 100 45 637 A divulgue un réservoir de carburant comportant une soupape monodirectionnelle en forme de bouchon disposée au niveau du conduit de remplissage à l'aide d'un moyen de fixation et comportant une zone de fragilisation à seuil de rupture calibré. La soupape comporte des moyens se présentant sous la forme d'un épaulement en appui contre une face extérieure du conduit de remplissage.

Dans certaines situation, et notamment lors d'affrontements armés, le réservoir de carburant d'un véhicule peut être percé par un projectile, ce qui a pour conséquence l'écoulement d'une grande quantité de carburant dans l'habitacle du véhicule et le déclenchement d'un incendie non contrôlé. Lorsque le réservoir est atteint par un projectile du type roquette à charge creuse, les risques encourus par le véhicule sont nombreux : surpression et explosion du réservoir, explosion du carburant, phénomène de « coup du bélier » dans les circuits distributeurs de carburant, boule de feu dans l'habitacle, etc.

La plupart des véhicules militaires comportent des dispositifs visant à réduire ces risques. Ainsi, les blindages passifs ou actifs protègent le véhicule, donc le réservoir, et évitent que ce dernier ne soit percé par une munition. Mais ces blindages ne sont pas totalement efficaces et doivent être complétés par d'autres solutions visant à minimiser chaque risque. On connaît déjà différentes solutions pour pallier ces problèmes : matériaux de remplissage contre les risques d'explosion, plaques en nid d'abeille contre les boules de feu, réservoir souple contre les coups de bélier hydrodynamique, etc. Ces dispositifs ne permettent cependant pas d'éviter la propagation puis l'embrasement du carburant à l'intérieur du véhicule lorsque le réservoir est percé.

Le but de la présente invention est de fournir un dispositif permettant de vidanger rapidement et à l'extérieur du véhicule le réservoir de carburant lorsque ce dernier est soumis à une pression importante.

L'invention a donc pour objet un réservoir de carburant selon la revendication 1.

Selon une caractéristique de l'invention, la soupape monodirectionnelle se présente sous la forme d'un bouchon solidaire du réservoir par un moyen de fixation à seuil de rupture calibré.

Selon une autre caractéristique de l'invention, la soupape monodirectionnelle se présente sous la forme d'un bouchon solidaire du réservoir et comportant une zone de fragilisation à seuil de rupture calibré.

Selon encore une autre caractéristique de l'invention, la soupape monodirectionnelle comporte une réserve de produit extincteur de flamme.

L'invention concerne également un réservoir de carburant pour véhicule comportant un dispositif de vidange d'urgence, disposé au niveau d'une partie inférieure du réservoir.

Selon une caractéristique, le réservoir se présente sous la forme d'un caisson à l'intérieur duquel est disposée une enveloppe souple contenant le carburant, le dispositif d'urgence étant disposé au niveau de la partie inférieure du réservoir.

Selon une autre caractéristique, le dispositif de vidange d'urgence est disposé sur une paroi latérale du réservoir.

Selon encore une autre caractéristique, la paroi supportant le dispositif de vidange est du type déformable.

L'invention concerne également un véhicule militaire à moteur thermique comportant un habitacle et au moins deux trains de roulement, et muni d'un réservoir de carburant, réservoir disposé dans un déport latéral disposé au-dessus d'un train de roulement ou dans un caisson disposé en avant ou en arrière de l'habitacle.

Avantageusement, le véhicule comporte un moyen de blindage interposé entre le réservoir et l'habitacle.

Un tout premier avantage du dispositif selon l'invention réside dans le fait qu'il permet une évacuation rapide du carburant à l'extérieur du véhicule en cas de surpression à l'intérieur du réservoir.

Un autre avantage du dispositif réside dans le fait qu'il ne présente pas de dégradation de la protection du réservoir face aux mines à effet de souffle.

Un autre avantage du dispositif réside dans le fait qu'il est facilement intégrable dans un véhicule et adaptable à tout type de véhicule.

Un autre avantage du dispositif réside dans le fait qu'il n'impose pas de réduction du volume d'emport de carburant.

Un autre avantage du dispositif réside dans le fait qu'il peut comporter un produit extincteur de flamme.

D'autres caractéristiques, détails et avantages de l'invention ressortiront plus clairement de la description donnée ci-après à titre indicatif en relation avec des dessins dans lesquels :
- la figure 1 représente schématiquement un réservoir de carburant pour véhicule équipé d'un dispositif de vidange d'urgence selon l'invention,
- les figures 2a et 2b illustrent des variantes de disposition du dispositif de vidange d'urgence,
- la figure 3a illustre un mode particulier de réalisation du dispositif de vidange d'urgence,
- la figure 3b est une vue à plus grande échelle illustrant la fixation du bouchon sur le support,
- les figures 4a et 4b illustrent des variantes de réalisation du bouchon,
- la figure 5 illustre une variante de réalisation du bouchon,
- les figures 6a et 6b illustrent une variante de réalisation d'un réservoir de l'invention comportant un dispositif selon l'invention, et
- les figures 7a et 7b illustrent une variante de disposition d'un réservoir selon l'invention sur un véhicule militaire.

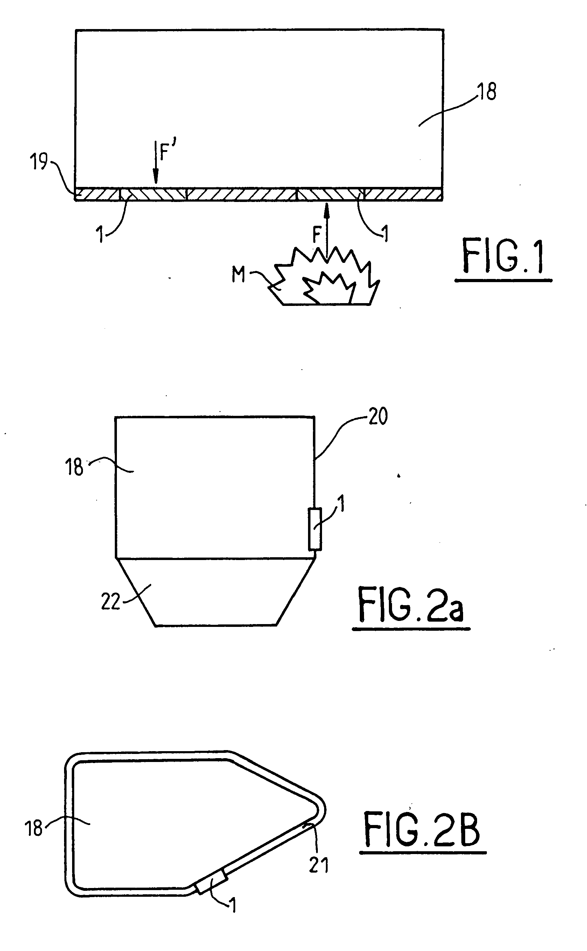

La figure 1 représente schématiquement en coupe de face un réservoir 18 de carburant pour véhicule équipé d'un dispositif de vidange d'urgence selon l'invention. Le réservoir 18 de carburant est de conception tout à fait classique et est prévu pour être intégré dans un véhicule. Un dispositif de vidange d'urgence est disposé au fond 19 du réservoir afin de permettre l'évacuation du carburant par gravité. Le dispositif de vidange est réalisé par une soupape 1 monodirectionnelle. La soupape 1 est dimensionnée d'une part pour résister à un effort F exercé de l'extérieur vers l'intérieur du réservoir, généré par exemple par l'explosion d'une mine M sous le véhicule, et d'autre part pour réaliser une vidange d'urgence du réservoir lors d'une surpression importante à l'intérieur de celui-ci. L'ouverture de la soupape 1 est provoquée par un effort F' (effort engendré par la pression interne) dont la valeur est déterminée en fonction des caractéristiques du réservoir.

Les figures 2a et 2b illustrent schématiquement des variantes de réalisation de l'invention. Dans une première variante de réalisation, illustrée par 1a figure 2a, la soupape monodirectionnelle 1 ne peut être supportée par le fond du réservoir car le réservoir est situé au-dessus d'un moteur 22 et il n'y a pas d'espace libre permettant l'évacuation du carburant sous le réservoir. La soupape 1 est alors disposée sur la paroi latérale 20 du réservoir pour permettre l'évacuation du carburant. Dans une autre variante de disposition, illustrée par la figure 2b en vue de profil, la soupape monodirectionnelle 1 est disposée sur une paroi oblique 21 du réservoir. Ces variantes de réalisation sont données à titre illustratif et correspondent à des réalisations particulières en fonction de la géométrie du véhicule équipé du dispositif. On disposera préférentiellement la soupape 1 au niveau du fond du réservoir. Mais lorsqu'une telle disposition sera impossible ou difficile à réaliser, on envisagera des solutions telles qu'illustrées par les figures 2a et 2b, en veillant à ce que la soupape monodirectionnelle 1 soit disposée au niveau de la partie inférieure du réservoir. On pourra évidemment réaliser de tels réservoirs avec des matériaux classiquement utilisés pour la fabrication de réservoirs et notamment des matériaux permettant d'obtenir un réservoir du type déformable.

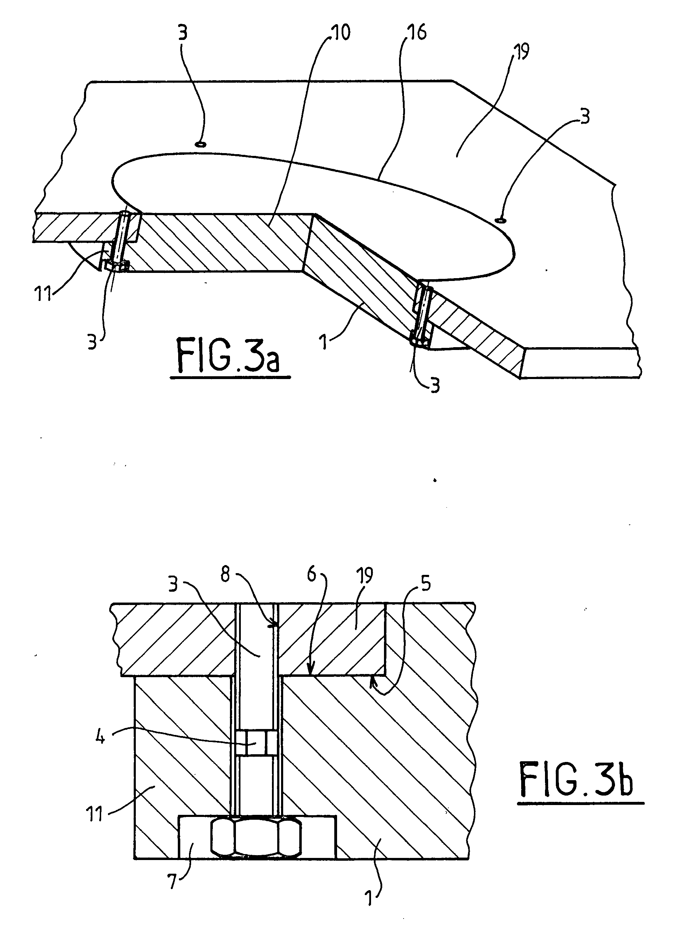

La figure 3a illustre un mode particulier de réalisation du dispositif de vidange d'urgence selon l'invention.

Dans ce mode de réalisation, la soupape monodirectionnelle est réalisée par un bouchon 1 solidaire d'une paroi d'un réservoir par des moyens de fixation 3 à seuil de rupture calibré. La paroi supportant le bouchon 1 est par exemple le fond 19 du réservoir de carburant. Le bouchon 1 est préférentiellement de révolution et est réalisé par un disque 10 de profil sensiblement complémentaire à une ouverture 16 réalisée dans le support 2. Le disque 10 comporte un épaulement 11 afin d'être en appui contre 1a face inférieure du fond 19 du réservoir.

La figure 3b illustre la fixation du bouchon 1 sur le fond 19 du réservoir de carburant. Sur cette vue, on peut voir que la partie supérieure 5 l'épaulement 11 est en appui contre la face inférieure 6 du fond 19. Le bouchon 1 comporte des logements 7 dans lesquels sont disposées des vis 3 à seuil de rupture calibré. Le fond 19 du réservoir comporte des trous 8 taraudés, sensiblement disposés coaxialement aux logements 7 afin que les vis 3 se vissent dans les trous 8 et réalisent ainsi la solidarisation du bouchon 1 et du réservoir de carburant. Les vis 3 comportent une zone de fragilisation 4 (ici réalisée par la diminution du diamètre d'une portion de la partie filetée).

Le principe de fonctionnement est le suivant : lorsque le bouchon 1 est soumis à un effort F (représenté sur la figure 1) exercé de l'extérieur vers l'intérieur du réservoir, cet effort est transmis au fond 19 du réservoir par la surface 5 du bouchon 1 en appui sur la surface 6 du fond 19. Le bouchon 1 et le réservoir 18 sont dimensionnées pour résister aux contraintes générées par cet effort. Lorsque le bouchon 1 est soumis à un effort F' exercé de l'intérieur vers l'extérieur du réservoir (représenté sur la figure 1) correspondant à une surpression anormale du réservoir, cet effort est supporté par les vis 3 et crée une contrainte interne élevée qui engendre une rupture au niveau de la zone de fragilisation 4. Le bouchon 1 n'étant plus maintenu solidaire du réservoir 18 par les vis 3 est éjecté et le carburant peut alors s'écouler par gravité.

Le bouchon 1 a donc une fonction de soupape monodirectionnelle de sécurité permettant de réaliser l'évacuation du carburant par gravité en cas de surpression à l'intérieur du réservoir.

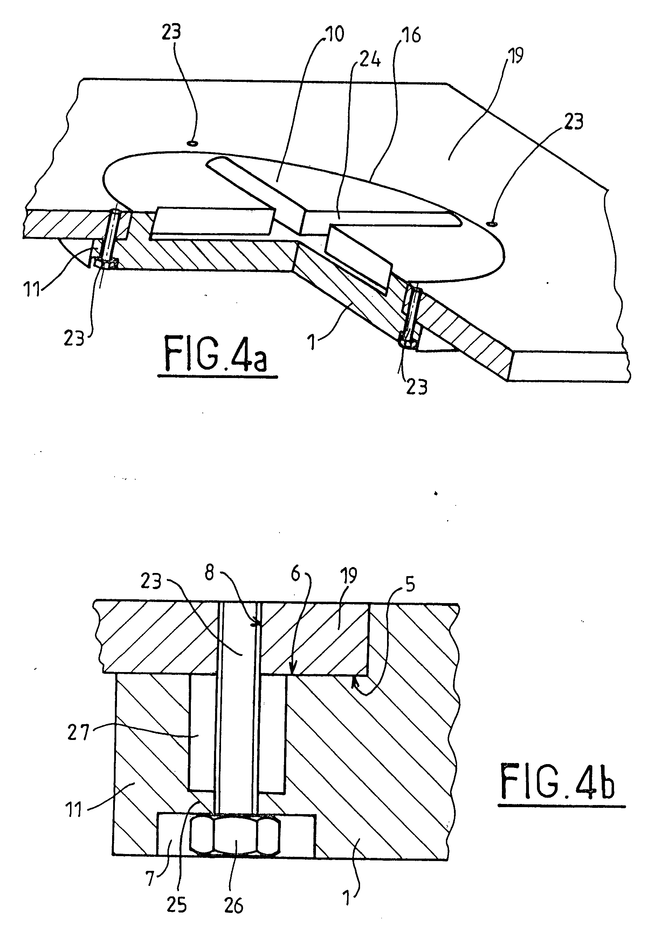

La figure 4a illustre une variante illustrative du bouchon 1, hors de l'étendue de protection. Ce bouchon est fixé au fond 19 du réservoir par des vis classiques 23. Le bouchon comporte une zone de fragilisation 24, par exemple en forme de croix. Ainsi le principe de fonctionnement du dispositif de vidange est sensiblement identique à celui décrit en relation avec les figures 3a et 3b, à l'exception de la zone de fragilisation qui n'est plus portée par les vis mais par le bouchon. Lors d'une importante pression interne, le bouchon s'éventre au niveau de la zone de fragilisation 24, permettant ainsi le passage du carburant.

La figure 4b illustre une variante de réalisation du bouchon 1. Dans cette variante de réalisation, le bouchon est fixé au fond 19 du réservoir par des vis classiques 23. Le bouchon comporte un perçage 27, de diamètre supérieur au diamètre de la tête 26 de la vis 23, créant une zone de fragilisation 25 au niveau de l'épaulement 11. Ainsi le principe de fonctionnement du dispositif de vidange est sensiblement identique à celui décrit en relation avec la figure 3b, à l'exception de la zone de fragilisation qui n'est plus portée par les vis 23 mais par le bouchon. Lors d'une importante pression interne, le bouchon cède au niveau de la zone de fragilisation 25. La tête 26 de la vis 23 n'est alors plus en appui sur l'épaulement 11 du bouchon 1 et ne retient plus ce dernier.

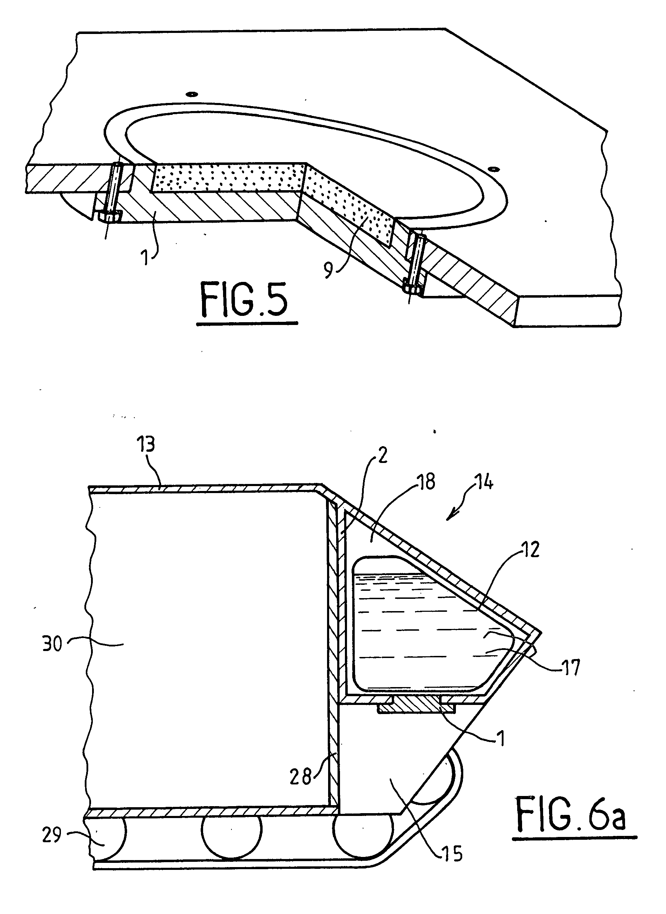

La figure 5 illustre une variante de réalisation de l'invention. Dans cette variante de réalisation, le bouchon 1 comporte une réserve 9 de produit extincteur de flamme. La réserve 9 de produit extincteur est disposée dans une excavation du bouchon 1 et se présente sous la forme d'une poche 9 étanche aux carburants et insoluble dans le carburant, renfermant un produit extincteur de flamme pouvant se présenter sous forme de poudre ou sous forme liquide. Le principe de fonctionnement de la soupape monodirectionnelle est identique à celui décrit précédemment, à l'exception du produit extincteur de flamme qui est libéré de sa poche 9 lors de l'ouverture de la soupape et se répand sous le réservoir de carburant.

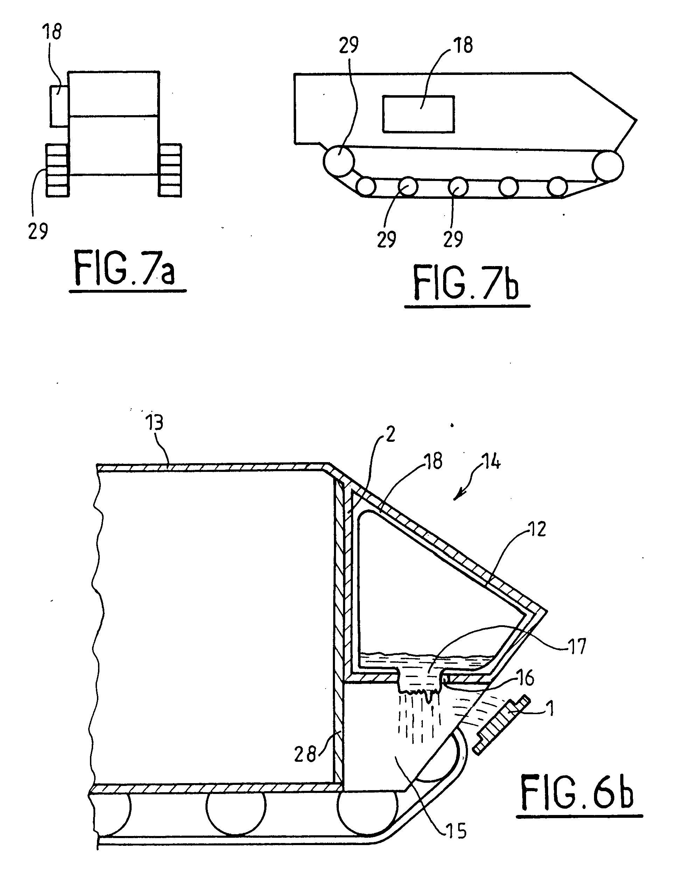

Les figures 6a et 6b illustrent un exemple de réalisation de l'invention. Dans cet exemple particulier, on a disposé une enveloppe souple 12 contenant du carburant 17 au niveau de la partie avant d'un véhicule militaire 14 à moteur thermique, comportant un habitacle 30 et au moins deux trains de roulement 29. L'enveloppe 12 est disposée dans un caisson 2 solidaire de la caisse 13 du véhicule 14 afin de réaliser un réservoir 18 de carburant. Le réservoir 18 comporte un bouchon 1 ayant une fonction de soupape monodirectionnelle de vidange telle que décrite précédemment. Le bouchon 1 est disposé au niveau de la partie inférieure du réservoir 18 et au-dessus d'une partie libre 15 de la caisse afin de permettre l'évacuation du carburant 17 par gravité en cas de surpression à l'intérieur du réservoir 18. Un moyen de blindage 28 interposé entre le réservoir 18 et l'habitacle 30.

La figure 6b représente le dispositif après exposition à une surpression importante : Sous l'action d'une importante pression interne, l'enveloppe 12 s'est déformée et a éjecté le bouchon 1 en raison de la pression exercée sur ce dernier. L'enveloppe 12 a prolongé sa déformation par expansion à travers l'ouverture 16 du réservoir 18 libérée lors de l'éjection du bouchon 1, jusqu'à éclatement de l'enveloppe 12. Le carburant 17 alors contenu dans l'enveloppe 12 est évacué par gravité. La déformation de l'enveloppe 12 au travers de l'ouverture permet également de limiter les effets du coup de bélier.

Les figures 7a et 7b représentent un véhicule militaire, du type véhicule chenillé, comportant un réservoir de carburant selon l'invention. Dans cet exemple de réalisation le réservoir 18 est disposé dans un déport latéral au-dessus d'un train de roulement 29 du véhicule.

Dans une variante de réalisation, on pourra disposer le réservoir de carburant dans un déport latéral disposé au-dessus d'un train de roulement, ou à l'arrière du véhicule.

Ces exemples de réalisation sont donnés à titre illustratifs et on pourra mettre en oeuvre l'invention par d'autres moyens. On pourra notamment utiliser d'autres moyens de fixation à seuil de rupture calibré. On pourra de plus associer ce dispositif à d'autres moyens de protection déjà connus tels que des doubles parois, une paroi pare-éclats, un réservoir auto obturant, ou un réservoir déformable.

On pourra avantageusement réaliser la paroi du réservoir supportant la soupape au moyen d'un matériau déformable. La déformation de la paroi du réservoir permettra ainsi de faciliter la rupture puis l'éjection de la soupape. La déformation de la paroi est de l'ordre de la dizaine de mm.

## Revendications

1. Réservoir de carburant pour véhicule, équipé d'un dispositif de vidange d'urgence comportant une soupape (1) monodirectionnelle sous la forme d'un bouchon (1) disposée au niveau d'une partie inférieure du réservoir à l'aide d'un moyen de fixation (3) et comportant une zone de fragilisation (4, 25) à seuil de rupture calibré afin d'assurer l'évacuation du carburant (17) par gravité en cas de surpression à l'intérieur du réservoir (18), la soupape comportant des moyens se présentant sous la forme d'un épaulement (11) contre une face extérieure d'une partie inférieure du fond (19) du réservoir assurant ainsi sa résistance vis à vis d'un effort exercé de l'extérieur vers l'intérieur du réservoir, ladite zone de fragilisation (4) étant aménagée au niveau des vis de fixation ou portée par le bouchon au niveau des épaulements (11).

2. Réservoir de carburant selon la revendication 1, **caractérisé en ce que** la soupape monodirectionnelle se présente sous la forme d'un bouchon (1) solidaire du réservoir (18) par un moyen de fixation (3) incorporant la zone de fragilisation (4) à seuil de rupture calibré.

3. Réservoir de carburant selon la revendication 1, **caractérisé en ce que** la soupape monodirectionnelle se présente sous la forme d'un bouchon (1) solidaire du réservoir (18) et comportant une zone de fragilisation (25) à seuil de rupture calibré.

4. Réservoir de carburant selon l'une des revendications 1 à 3, **caractérisé en ce que** la soupape monodirectionnelle (1) comporte une réserve (9) de produit extincteur de flamme.

5. Réservoir (18) de carburant selon l'une des revendications précédentes, **caractérisé en ce qu'**il se présente sous la forme d'un caisson (2) à l'intérieur duquel est disposée une enveloppe souple (12) contenant le carburant, le dispositif d'urgence étant disposé au niveau de la partie inférieure du réservoir.

6. Réservoir (18) de carburant pour véhicule selon la revendication 5, **caractérisé en ce que** le dispositif de vidange d'urgence est disposé sur une paroi latérale (20, 21) du réservoir (18).

7. Réservoir (18) de carburant pour véhicule selon l'une quelconque des revendications 5 ou 6, **caractérisé en ce que** la paroi (19, 20, 21) supportant le dispositif (1) de vidange est du type déformable.

8. Véhicule militaire (14) à moteur thermique comportant un habitacle et au moins deux trains de roulement (29), **caractérisé en ce qu'**il comporte un réservoir de carburant selon l'une des revendications précédentes, réservoir disposé dans un déport latéral disposé au-dessus d'un train de roulement ou dans un caisson (2) disposé en avant ou en arrière de l'habitacle.

9. Véhicule militaire selon la revendication 8, **caractérisé en ce qu'**il comporte un moyen de blindage (28) interposé entre le réservoir (18) et l'habitacle (30).

## Patentansprüche

1. Kraftstofftank für ein Fahrzeug, welcher mit einer Vorrichtung zur Notentleerung ausgerüstet ist, welche ein Einwegventil (1) in der Form eines Stopfens (1) umfasst, welcher im Bereich eines unteren Teils des Tanks mit Hilfe eines Befestigungsmittel (3) angeordnet ist, und welche eine Versprödungszone (4, 25) mit kalibrierter Bruchgrenze umfasst, um das Ablaufen des Kraftstoffes (17) durch Schwerkraft im Falle von Überdruck im Inneren des Tanks (18) zu gewährleisten, wobei das Ventil Mittel umfasst, welche sich in Form einer Schulter (11) gegen eine äußere Fläche eines unteren Teils des Bodens (19) des Tanks darstellen, um so eine Widerstandsfähigkeit gegenüber einer von Außen in das Innere des Tanks ausgeübten Kraft zu gewährleisten, wobei die genannte Versprödungszone (4) im Bereich von Befestigungsschrauben eingebracht ist oder vom Stopfen im Bereich der Schultern (11) getragen wird.

2. Kraftstofftank nach Anspruch 1, **dadurch gekennzeichnet, dass** das Einwegventil sich in der Form eines Stopfens (1) darstellt, welcher durch ein Befestigungsmittel (3), welches die Versprödungszone (4) mit kalibrierter Bruchgrenze einschließt, fest mit dem Tank (18) verbunden ist.

3. Kraftstofftank nach Anspruch 1, **dadurch gekennzeichnet, dass** das Einwegventil sich in der Form eines Stopfens (1) darstellt, welcher fest mit dem Tank (18) verbunden ist und eine Versprödungszone (25) mit kalibrierter Bruchgrenze einschließt.

4. Kraftstofftank nach einem der Ansprüche 1 bis 3, **dadurch gekennzeichnet, dass** das Einwegventil (1) einen Vorrat (9) an Feuerlöschmittel umfasst.

5. Kraftstofftank (18) nach einem der vorhergehenden Ansprüche, **dadurch gekennzeichnet, dass** er sich in der Form eines Kastens (2) darstellt, in dessen Inneren eine elastische Hülle (12) angeordnet ist, welche den Kraftstoff enthält, wobei die Noteinrichtung im Bereich des unteren Teils des Tanks angeordnet ist.

6. Kraftstofftank (18) für ein Fahrzeug nach Anspruch 5, **dadurch gekennzeichnet, dass** die Vorrichtung zur Notentleerung an einer Seitenwand (20, 21) des Tanks (18) angeordnet ist.

7. Kraftstofftank (18) für ein Fahrzeug nach irgendeinem der Ansprüche 5 oder 6, **dadurch gekennzeichnet, dass** die Wand (19, 20, 21), welche die Vorrichtung zur Entleerung (1) trägt, verformbar ist.

8. Militärisches Fahrzeug (14) mit Verbrennungsmotor umfassend einen Fahrgastraum und wenigstens zwei Laufwerke (29), **dadurch gekennzeichnet, dass** es einen Kraftstofftank nach einem der vorhergehenden Ansprüche umfasst, wobei der Tank in einem oberhalb eines Laufwerks angeordneten seitlichen Versatz oder in einem vor oder hinter dem Fahrgastraum angeordneten Kasten (2) angeordnet ist.

9. Militärfahrzeug nach Anspruch 8, **dadurch gekennzeichnet, dass** es ein Mittel zur Panzerung (28) umfasst, welches zwischen dem Tank (18) und dem Fahrgastraum (30) eingefügt ist.

## Claims

1. A fuel tank for a vehicle, fitted with an emergency emptying device incorporating a one-way valve (1) in the form of a plug (1) positioned at a lower part of the tank by means of fastening means (3) and incorporating an embrittled zone (4, 25) with a calibrated breaking point so as to ensure the elimination of the fuel (17) through gravity in the event of an overpressure inside the tank (18), the valve incorporating means in the form of a shoulder (11) pressing against an exterior face of a lower part of the bottom (19) of the tank thereby ensuring its resistance to any stress exerted from the exterior to the interior of the tank, said embrittlement zone (4) being arranged around fastening screws or on the plug at the shoulders (11).

2. A fuel tank according to Claim 1, **characterized in that** the one-way valve is in the form of a plug (1) integral with the tank (18) by fastening means (3) incorporating the embrittlement zone (4) with a calibrated breaking point.

3. A fuel tank according to Claim 1, **characterized in that** the one-way valve is in the form of a plug (1) integral with the tank (18) and incorporating an embrittlement zone (25) with a calibrated breaking point.

4. A fuel tank according to one of Claims 1 to 3, **characterized in that** the one-way valve (1) incorporates a reserve (9) of flame-extinguishing agent.

5. A fuel tank (18) according to one of the above Claims, **characterized in that** it is in the form of a container compartment (2) inside which there is a flexible pocket (12) containing the fuel, the emergency device being position at the lower part of the tank.

6. A fuel tank 18) for a vehicle according to Claim 5, **characterized in that** the emergency emptying device is positioned on a side wall (20, 21) of the tank (18).

7. A fuel tank (18) for a vehicle according to either one of Claims 5 or 6, **characterized in that** the wall (19, 20, 21) supporting the emptying device (1) is of the deformable type.

8. A military vehicle (14) with a heat engine incorporating a passenger compartment and at least two crawler tracks (29), **characterized in that** it incorporates a fuel tank according to one of the above Claims, tank positioned in a lateral offset arranged above the crawler track or in a container compartment (2) arranged to the front or rear of the passenger compartment.

9. A military vehicle according to Claim 8, **characterized in that** it incorporates armouring means (28) positioned between the tank (18) and the passenger compartment (30).
